# EUROPÄISCHE PATENTSCHRIFT

(11) **EP 1 312 811 B1**
(45) Veröffentlichungstag und Bekanntmachung des Hinweises auf die Patenterteilung: **22.03.2006**
(21) Anmeldenummer: 02016951.2
(22) Anmeldetag: 01.08.2002
(51) Int. Cl.: F16B 19/10

(54) **Befestigungssystem für Fassadenplatten**
Fastening system for facade panels
Système pour la fixation de panneaux de façade

(30) Priorität: 20.11.2001 DE 10156843
(43) Veröffentlichungstag der Anmeldung: 21.05.2003
(73) Patentinhaber: Gülde Peter, 58730 Fröndenberg (DE)
(72) Erfinder: Gülde Peter, 58730 Fröndenberg (DE)
(74) Vertreter: Rögner, Jürgen

(56) Entgegenhaltungen:
- EP-A- 0 124 489
- DE-A- 2 535 237
- DE-A- 4 019 193

## Beschreibung

Die Erfindung betrifft ein Befestigungssystem zur Befestigung von Fassadenplatten mit einem Blindniet, einem Nietkopf, einem Nietschafi und einem Schließkopfende gemäß dem Oberbegriff des Anspruchs 1. Außenmauem von Gebäuden werden oft mit einer Plattenfassade versehen, die auf einer Unterkonstruktion montiert wird, die in letzter Zeit sehr häufig aus Aluminium hergestellt wird. Um die Fassadenplatten an solchen Aluminium-Unterkonstruktionen zu befestigen, muss man Blindniete verwenden, da Gewindebohrungen in der Aluminium-Unterkonstruktion nicht den gewünschten, dauerhaften Halt liefern.

Die Köpfe solcher Blindniete sind an der Außenseite der Fassadenplatten sichtbar, und sie werden meist in der Fassadenfarbe lackiert, um den äußeren Gesamteindruck nicht zu stören.

Blindniete mit Einrichtungen zum Anbringen eines Niet-Zusatzelements sind beispielsweise aus der EP 0 124 489 A1 sowie aus der DT 25 35 237 A1 bekannt.

Ausgehend von einem solchen Stand der Technik ist es die Aufgabe der vorliegenden Erfindung, ein Befestigungssystem zu schaffen, welches einerseits eine zwängungsfreie Montage von Fassadenplatten und andererseits eine Schonung der empfindlichen Bauteile des Niets beim Vernieten ermöglicht, also beispielsweise einer Einrichtung zum Anbringen eines Nietzusatzelements.

Diese Aufgabe wird durch den Gegenstand des Patentanspruchs 1, insbesondere durch die Merkmale im kennzeichnenden Teil gelöst. Die Unteransprüche definieren bevorzugte Ausführungsformen der vorliegenden Erfindung.

Ein mit dem erfindungsgemäßen System befestigter Blindniet kann die Wünsche vieler Architekten erfüllen, das Bild einer vorgehängten, hinterlüfteten Fassade dekorativer zu gestalten. Die Befestigungsstellen, die mit den Blindnieten befestigt sind, können als besondere Elemente hervorgehoben werden, so dass ein abwechslungsreiches Bild - eine belebte Fassade - entsteht. Die Einrichtung zum Anbringen solcher Zusatzelemente am Nietkopf kann aber auch technische Vorteile mit sich bringen. So wäre es beispielsweise möglich, zusätzliche Halteelemente oder Korrosionsschutzelemente anzubringen, die dann die Funktion und Lebensdauer der Befestigung erhöhen können.

Gemäß einer Ausführungsform der vorliegenden Erfindung bildet das Niet-Zusatzelement einen knopfartigen Vorsprung auf der Fassadenplatte aus, der dann beispielsweise in verschiedenen Farben zur Verschönerung der Fassade gestaltet werden kann.

Eine Ausführungsform der vorliegenden Erfindung ist dadurch gekennzeichnet, dass die Einrichtung zum Anbringen des Niet-Zusatzelements einen Verlängerungsabschnitt des Nietschaftes umfasst, wobei das Niet-Zusatzelement ein hülsenartiges Bauteil ist, das einen zentralen Durchgang aufweist. Dieser zentrale Durchgang nimmt dann den Nietverlängerungsabschnitt auf, d. h. die Hülse wird vor dem Nietvorgang auf den Nietschaft aufgesteckt, bis sie am Kopf anliegt. Das hülsenartige Bauteil kommt dann zwischen dem Nietkopf und der Oberseite der Fassadenplatte zu liegen.

Der Nietkopf bildet in diesem Fall zusammen mit dem hülsenartigen Bauteil eine Art "Knopf" auf der Fassadenplatte an der Befestigungsstelle aus, der als dekoratives Element verwendet werden kann. Das hülsenartige Bauteil unterhalb des Nietkopfes ist aus Aluminium oder einem ähnlichen gut zerspanbaren bzw. spritzbaren Werkstoff aufgebaut und kann in jeder gewünschten Farbe beschichtet werden. Ein optisch guter Eindruck entsteht dann, wenn das hülsenartige Bauteil im Wesentlichen denselben Außendurchmesser aufweist wie der Nietkopf.

Nach einer anderen Ausführungsform der vorliegenden Erbndung umfasst die Einrichtung zum Anbringen des Niet-Zusatzelements einen Befestigungsabschnitt, der eine Befestigung des Niet-Zusatzelements auf der Außenseite des Nietkopfes gestattet, also auf der dem Nietschaft abgewandten Seite. Anders als bei der vorhergehend beschriebenen Ausführungsform kommt also nunmehr das Niet-Zusatzelement außen "über" dem Nietkopf zur Befestigung, wodurch es möglich wird, den Nietkopf vollständig der Ansicht von außen zu entziehen. Dadurch entsteht eine sehr große Gestaltungsfreiheit bei der Ausbildung der hervorgehobenen Befestigungsstelle.

Grundsätzlich kann eine solche Befestigung an der Nietkopfaußenseite mit allen möglichen Befestigungselementen realisiert werden, also beispielsweise als Steckbefestigung, als Klebebefestigung, als Clipverbindung, als Passverbindung oder in jedweder anderen denkbaren Halterungsweise. Bei einer besonders bevorzugten Ausführungsform der vorliegenden Erfindung ist aber der Befestigungsabschnitt ein zur Außenseite hin abstehender Außengewindeabschnitt, und auf diesem Außengewindeabschnitt kann das Niet-Zusatzelement dann mittels einer Schraubverbindung befestigt werden.

Bei dieser gerade genannten Variante kann der Außengewindeabschnitt eine solche Länge haben, dass er sicher befestigt in einer Gewinde-Sacklochbohrung eines Aufsatzelements, insbesondere eines Dekorknopfes, fixiert werden kann, wobei das Aufsatzelement dann das genannte Niet-Zusatzelement bildet.

Um die Verbindung zwischen dem genannten Außengewindeabschnitt und der Gewinde-Sacklochbohrung zu sichern, kann eine Mikroverkapselung vorgesehen werden.

Ferner sieht die Erfindung gemäß einer Ausführungsform vor, am Schließkopfende des Blindnietes eine Verdrehsicherung anzuordnen. Durch die Verdrehsicherung, beispielsweise eine Rändelung im Bereich der Schließkopfbildung wird, nachdem sich beim Vernieten der Schließkopf gebildet hat, eine Drehsperre für den Blindniet geschaffen, die sicherstellt, dass dieser sich beim Aufschrauben des Aufsatzelements nicht mitdrehen kann. Der Blindniet wird am Schließkopfende beim Vernieten dicker und die Zähne der Rändelung setzen sich verdrehsicher in der Unterkonstruktion fest.

Die Erfindung wird im Weiteren anhand von Ausführungsformen und mit Hilfe der beiliegenden Zeichnungen näher erläutert. Es zeigen:
- Figur 1: die Einzelteile eines Blindniets in einer Ausführungsform gemäß dem Stand der Technik;
- Figur 2: den Zustand des Blindniets gemäß Figur 1 bei gesetztem Niet vor dem Vernieten;
- Figur 3: den Blindniet gemäß Figur 1 in vernietetem Zustand;
- Figur 4: einen Blindniet in einer weiteren Ausführungsform nach dem Stand der Technik;
- Figur 5: den Blindniet nach Figur 4 vor dem Vernietungsvorgang mit einem Spezial Lehrenmundstück mit einem erfindungsgemäßen Befestigungssystem;
- Figur 6: den Blindniet gemäß Figur 4 nach dem Vernieten mit aufgesetztem Dekorknopf; und
- Figur 7: verschiedene Montagestadien für die Befestigung von Fassadenplatten mit erfindungsgemäßen Blindnieten nach Figur 4.

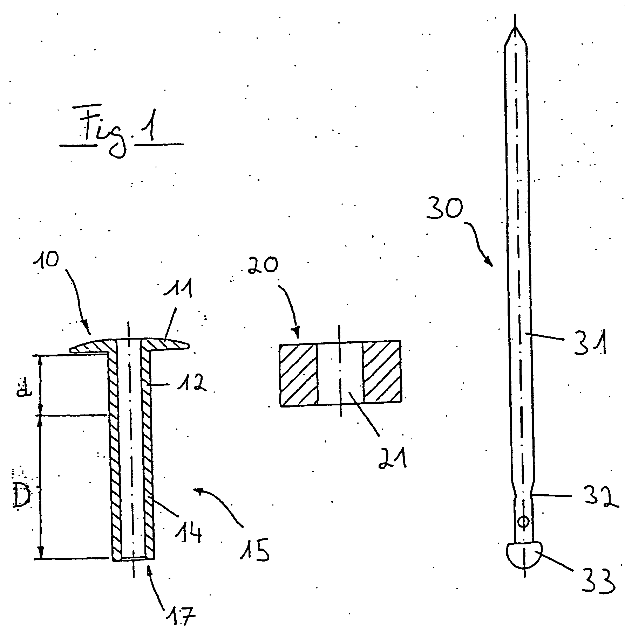

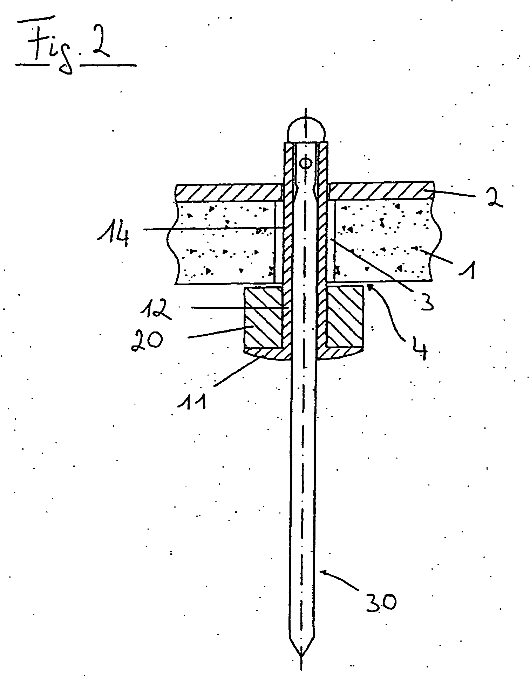

In der folgenden Figurenbeschreibung werden für gleiche bzw. entsprechende Teile dieselben Bezugszeichen verwendet. In Figur 1 sind die Einzelteile einer ersten Ausführungsform eines Blindniets gemäß dem Stand der Technik aufgezeigt. Der Blindniet ist insgesamt mit dem Bezugszeichen 10 versehen und weist einen Nietkopf 11, einen Nietschaft 15 und ein Schließkopfende 17 auf. Der Nietschaft kann in seiner Länge in zwei Abschnitte unterteilt werden, die jeweils die Länge d und D haben, nämlich den Nietschaftabschnitt 14, der die Nietfunktionen übernimmt und den Verlängerungsabschnitt 12, der als Einrichtung zum Anbringen eines Niet-Zusatzelements 20 dient. Dieses Niet-Zusatzelement 20 ist rechts neben dem Niet 10 dargestellt, und es besteht aus einer Hülse 20 aus beispielsweise Aluminium, die einen Durchgang 21 aufweist. Die Hülse 20 ist im vorliegenden Ausführungsbeispiel von kreisrundem Aufbau und der Durchgang 21 ist von seinen Abmessungen her so beschaffen, dass die Hülse 20 auf dem Nietschaft 15 aufgesteckt werden kann. Die Länge der Hülse 20 entspricht im Wesentlichen der Länge d des Verlängerungsabschnittes 12, auf dem sie bei der Montage zu liegen kommt.

Rechts neben dem Niet 10 und der Hülse 20 ist noch der Vollständigkeit halber der Nietdom 30 gezeigt, der einen Schaft 31, eine Sollbruchstelle 32 und den Nietdornkopf 33 aufweist.

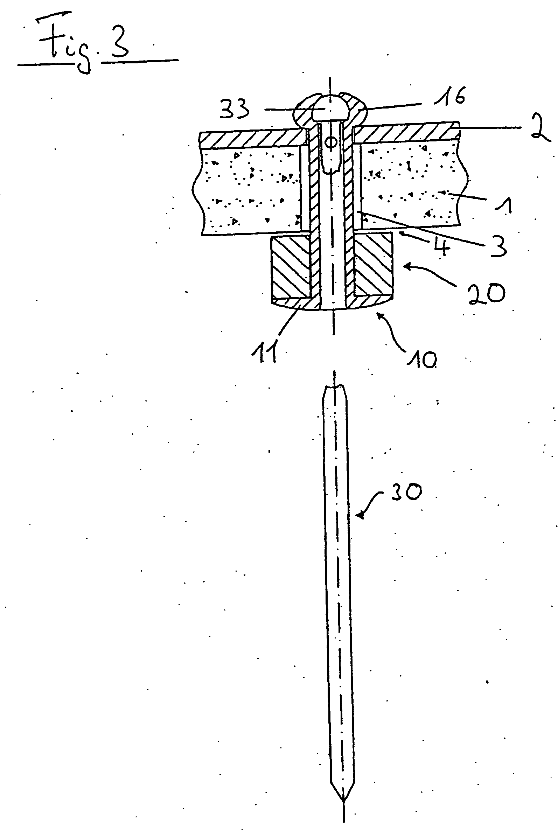

Die vorher beschriebene Nietanordnung wird nunmehr so gesetzt, wie dies in Figur 2 dargestellt ist. Gezeigt ist hier im Schnitt eine Fassadenplatte 1 mit einem Durchgang 3 für den Nietschaftabschnitt 14. Die Fassadenplatte 1 liegt auf einem Aluminium-Profil 2, das ebenfalls einen Durchgang zur Durchführung des Nietschaftes 14 aufweist. Der Nietdorn 30 befindet sich innerhalb des Nietschaftes 12, 14 in Vorbereitung für das Vernieten, und die Hülse 20 ist im Verlängerungsbereich 12 auf den Nietschaft aufgesteckt. Hülse 20 und Nietkopf 11 befinden sich an der sichtbaren Seite der Fassadenplatte 1.

Zwischen der Hülse 20 und der Fassadenplatte 1 ist ein Spalt 4 vorgesehen, der auch nach dem Vemietvorgang noch vorhanden sein wird. Der Spalt 4 beträgt etwa 0,3 mm und ist notwendig, damit die Fassade sich gleitend bei Temperaturschwankungen und Feuchtigkeitsveränderungen ausdehnen kann.

Um diesen Spalt 4 aufrecht erhalten zu können, wird das Vernieten mit Hilfe eines speziellen Lehrenmundstücks durchgeführt; dies wird später anhand der zweiten Ausführungsform nochmals genauer erläutert.

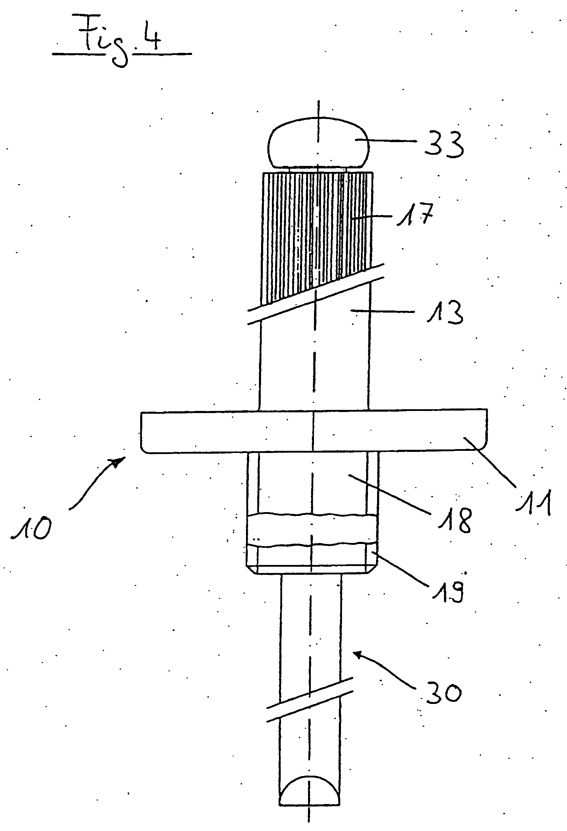

Die Figur 3 zeigt den Zustand nach dem Vernieten, also nach der Schließkopfbildung, wenn der Nietdornkopf 33 in den Schließkopfabschnitt eingedrungen ist und sich ein erweiterter Schließkopf 16 gebildet hat. Der Nietdom 30 wird dann an der Sollbruchstelle abgetrennt, und der Niet 10 hält nunmehr die Fassadenplatte 1 an der Unterkonstruktion 2. Wegen des Einsatzes des vorgenannten Lehrenmundstücks ist der Spalt 4 zwischen der Hülse 20 und der Fassadenplatte 1 noch immer vorhanden, so dass ein ausreichendes Gleitspiel gegeben ist. Ferner ist noch anzumerken, dass die Bohrung 3 in der Fassadenplatte ebenfalls ein Spiel zum Nietschaft aufweist. Dieses Spiel liegt im Bereich von 0,5 bis 5 mm, damit sich die Platte 1 ausdehnen kann, ohne den Nietschaft zu belasten. Der Nietkopf 11 und die Hülse 20 bilden nunmehr den sichtbaren Teil des Befestigungselements auf der Fassadenplatte 1 und können als dekorativer Knopf in jedweder gewünschten Farbe ausgestaltet werden.

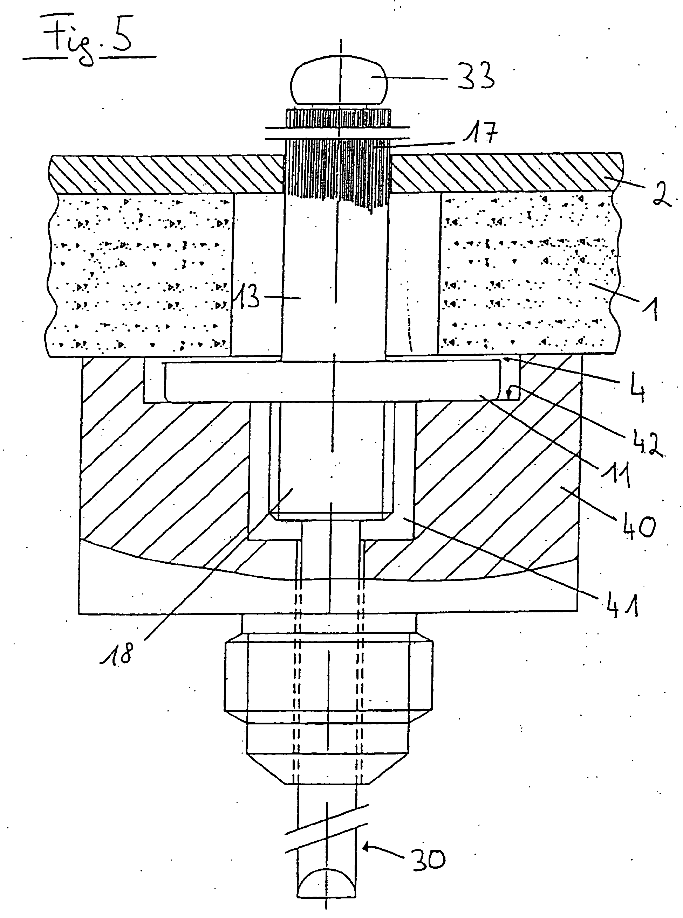

Eine weitere Ausführungsform des Blindniets zeigen die Figuren 4 bis 6. In Figur 4 ist wiederum der herkömmliche Blindniet 10 alleine dargestellt, mit dem Nietkopf 11, dem Nietschaft 13 und dem Schließkopfende 17. Durch den Niet hindurch verläuft schon der Nietdom 30 mit dem an der Oberseite herausragenden Nietdornkopf 33. Der Schließkopfbereich 17 des Schaftes 13 ist gerändelt, um eine Verdrehsperre bereitzustellen, wie im Weiteren noch detaillierter erläutert werden wird.

Die Einrichtung zum Anbringen eines Niet-Zusatzelements befindet sich auf der schaftabgewandten Seite des Nietkopfes 11, und sie besteht in diesem Ausführungsbeispiel aus einem vom Kopf 11 wegstehenden, hohlen Gewindefortsatz 18 mit dem Außengewinde 19.

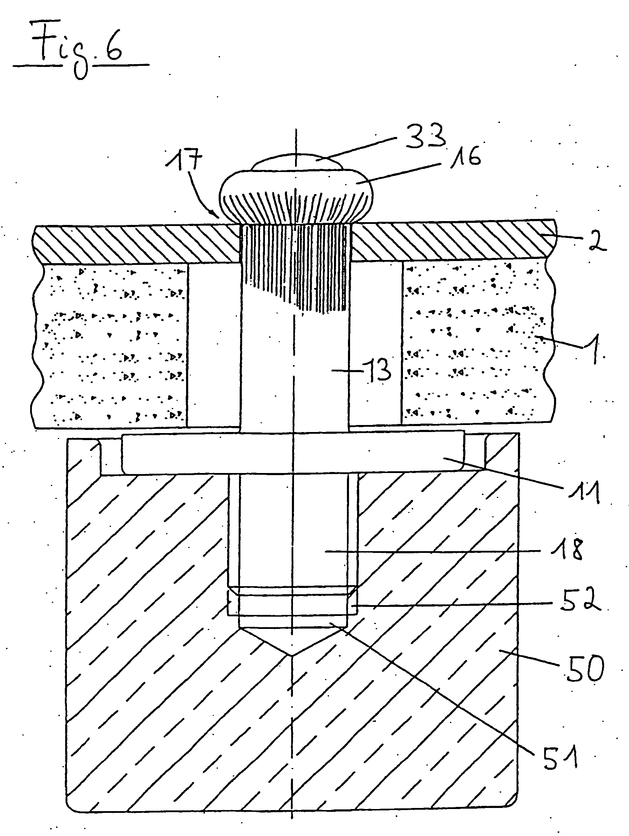

In der Figur 5 ist gezeigt, wie ein solcher Niet erfindungsgemäß gesetzt wird, und hier wird insbesondere die Verwendung eines Lehrenmundstücks 40 beschrieben. In der Figur 5 ist wiederum die Fassadenplatte 1 mit der Aluminium-Unterkonstruktion 2 gesetzt, durch die der Netschaft 13 hindurch geführt ist. Der Nietschaft 13 ist dabei mit einer solchen Länge ausgeführt, dass der Schließkopfabschnitt 17 mit der Rändelung im Bereich der Unterkonstruktion 2 zu liegen kommt.

Über den Nietkopf 11 und den Gewindefortsatz 18 kommt beim Vernieten das Lehrenmundstück 40 zu liegen, welches an seiner oben dargestellten Seite eine Ausnehmung zur Aufnahme des Nietkopfes 11 aufweist. Ebenfalls ist die Ausnehmung um den Bereich 41 erweitert, der den Gewindefortsatz 18 aufnehmen kann.

Das Lehrenmundstück 40 dient dazu, den Spalt 4 beim Vernieten aufrecht zu erhalten, und dazu liegt der Nietkopf 11 mit seiner unten dargestellten Seite an der Fläche 42 des Lehrenmundstücks 40 auf. Wenn nun der Nietdom 30 in Figur 5 nach unten gezogen wird, um den Schließkopf auszubilden, wirkt die Kraft so, dass der Nietkopf 11 auf die Fläche 42 gedrückt wird, und dabei bildet sich ein Schließkopf, ohne dass der Spalt 4 verengt oder ganz aufgehoben wird. In analoger Weise wird der Spalt 4 bei der Ausführungsform nach Figuren 1 bis 3 aufrecht erhalten.

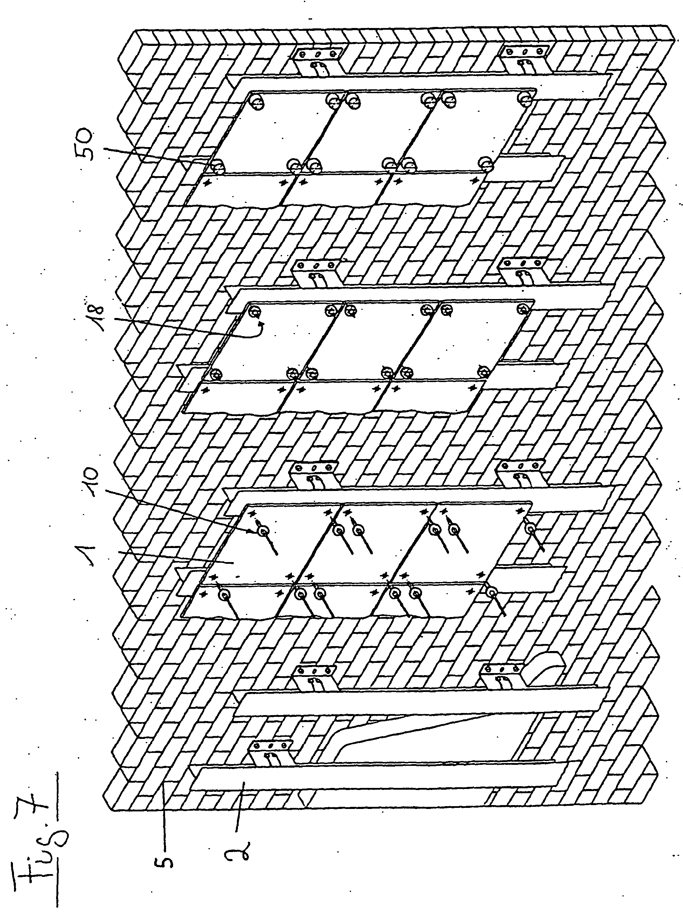

Die Figur 6 zeigt nun den gesetzten Niet mit verbreitertem Nietschaftende 17, nachdem der Nietdornkopf 33 in dieses Ende eingedrungen ist. Der Schließkopf 16 hat sich dabei gebildet, und außerdem ist eine Verdrehsicherung mittels der Rändelung gebildet worden. Bei der Schließkopfbildung wird der Blindniet im Bereich der Bohrung in der Aluminium-Unterkonstruktion 2 dicker, und die so entstehende Lochreibung ist zugleich eine Verdrehsicherung. Diese Sicherung ist grundsätzlich auch ohne Rändelung erzielbar, um sie jedoch noch zu verbessern, wird die gezeigte Rändelung bei diesem Ausführungsbeispiel bereitgestellt. Wenn sich der Schließkopf 16 bildet, wird das Nietschaftende 17 dicker und stützt sich mit den Zähnen der Rändelung in der Bohrung der Unterkonstruktion ab, so dass sich der Blindniet nicht mehr verdrehen kann.

Die oben besprochene Verdrehsicherung ist vorteilhaft in Verbindung mit der Verwendung des Blindniets als Befestigungselement für ein dekoratives Aufsatzelement, das in Figur 6 als Knopf 50 dargestellt ist. Dieser Knopf 50 weist eine Sacklochbohrung 51 auf, die ein Innengewinde 52 hat, welches mit dem Außengewinde des Gewindefortsatzes 18 zusammenpasst Der Knopf 50 kann damit auf den Gewindefortsatz 18 aufgeschraubt werden, und dies geschieht wegen der oben besprochenen Verdrehsicherung ohne ein "Durchdrehen" des Nietschafts 13. An der Seite, wo der Knopf 50 mit dem Kopf 11 des Niets in Anlage kommt, hat er eine Aussparung, die den Nietkopf 11 im Wesentlichen vollständig aufnimmt. Die Gewindeverbindung zwischen dem Knopf 50 und dem Gewindefortsatz 18 kann mittels einer Mikroverkapselung gesichert werden.

Auch in diesem Ausführungsbeispiel wird an der sichtbaren Vorderseite der Fassade ein dekorativer, farblich frei wählbarer Aufsatz geschaffen, wobei der Nietkopf 11 nicht mehr sichtbar ist und damit keiner besonderen Farbgebung bedarf. Der Niet selbst kann deshalb schon billiger hergestellt werden.

In der Figur 7 sind die Montagestadien für eine Plattenfassade der Reihe nach von links nach rechts dargestellt. An einer Außenmauer 5 eines Gebäudes sind, wie linksseitig dargestellt ist, Aluminium-Unterkonstruktionen 2 befestigt, die trägerartig ausgebildet sind. Auf diese Unterkonstruktion werden nun, wie im Bild rechts daneben gezeigt ist, die Fassadenplatten 1 aufgelegt, die mit den Blindnieten 10 gemäß der vorliegenden Erfindung befestigt werden sollen. Die Blindnieten 10 sind solche mit einem nach außen vorstehenden Gewindefortsatz, wie sie vorher im Rahmen der zweiten Ausführungsform beschrieben worden sind. Im dritten Bild von links in Figur 7 ist der Zustand dargestellt, wo die Fassadenplatten schon mittels der Blindnieten befestigt sind, und es stehen die Gewindefortsätze 18 nach vorne ab, an denen dann die Knöpfe 50 befestigt, nämlich aufgeschraubt werden. In diesem Fall bildet der Nietkopf 11 eine Art "Flansch" für das Niet-Zusatzelement, also den Knopf 50 aus. Der Endzustand ist dann in der rechten Darstellung der Figur 7 zu sehen, wo die Außenfassade durch die hervorgehobenen Knöpfe 50 an den Blindnieten im Gesamteindruck vervollständigt wird.

## Patentansprüche

1. Befestigungssystem zur Befestigung von Fassadenplatten (2), mit einem Blindniet (10) mit einem Nietkopf (11), einem Nietschaft (15) und einem Schließkopfende (17), wobei im Bereich des Nietkopfes (11) eine Einrichtung (12, 18) zum Anbringen eines Niet-Zusatzelements (20, 50), insbesondere eines Dekorelements, vorgesehen ist, **gekennzeichnet durch** ein Lehrenmundstück (40), das beim Vernieten über dem Nietkopf (11) und der Einrichtung (12, 18) zum Anbringen des Niet-Zusatzelements (20, 50) zu liegen kommt, und das eine Ausnehmung (41, 42) zur Anlage der vom Schließkopf (17) abgewandten Seite des Nietkopfes (11) und zur Aufnahme der Einrichtung (12, 18) zum Anbringen eines Niet-Zusatzelements (20, 50) aufweist.

2. Befestigungssystem nach Anspruch 1, **dadurch gekennzeichnet, dass** das Niet-Zusatzelement (20, 50) einen knopfartigen Vorsprung auf der Fassadenplatte (2) ausbildet.

3. Befestigungssystem nach Anspruch 1 oder 2, **dadurch gekennzeichnet, dass** die Einrichtung zum Anbringen des Niet-Zusatzelements einen Verlängerungsabschnitt (12) des Nietschaftes (15) umfasst, wobei das Niet-Zusatzelement ein hülsenartiges Bauteil (20) ist, das einen zentralen Durchgang (21) aufweist, der den Nietschaftverlängerungsabschnitt (12) aufnimmt, so dass das hülsenartige Bauteil zwischen dem Nietkopf (11) und der Oberseite der Fassadenplatte (2) zu liegen kommt.

4. Befestigungssystem nach Anspruch 3, **dadurch gekennzeichnet, dass** das hülsenartige Bauteil (20) im Wesentlichen denselben Außendurchmesser aufweist wie der Nietkopf (11).

5. Befestigungssystem nach Anspruch 1 oder 2, **dadurch gekennzeichnet, dass** die Einrichtung zum Anbringen des Niet-Zusatzelements einen Befestigungsabschnitt umfasst, der eine Befestigung des Niet-Zusatzelements auf der Außenseite des Nietkopfes gestattet, also auf der vom Nietschaft (15) abgewandten Seite.

6. Befestigungssystem nach Anspruch 5, **dadurch gekennzeichnet, dass** der Befestigungsabschnitt ein zur Außenseite abstehender Außengewindeabschnitt (18, 19) ist.

7. Befestigungssystem nach Anspruch 6, **dadurch gekennzeichnet, dass** der Außengewindeabschnitt (18, 19) eine solche Länge hat, dass er sicher befestigt in einer Gewinde-Sacklochbohrung (41) eines Aufsatzelements (40), insbesondere eines Dekorknopfes, fixiert werden kann, wobei das Aufsatzelement das Niet-Zusatzelement bildet.

8. Befestigungssystem nach Anspruch 7, **dadurch gekennzeichnet, dass** die Gewindeverbindung zwischen dem Außengewindeabschnitt (18, 19) und der Gewindesacklochbohrung (41) mittels Mikroverkapselung gesichert ist.

9. Befestigungssystem nach einem der Ansprüche 6 bis 8, **dadurch gekennzeichnet, dass** am Schließkopfende eine Verdrehsicherung angeordnet ist.

10. Befestigungssystem nach Anspruch 9, **dadurch gekennzeichnet, dass** die Verdrehsicherung eine Rändelung des Schließkopfende-Außenbereiches umfasst.

## Claims

1. Fixing system for facade panels (2), with a blind rivet (10) comprising a rivet head (11), a rivet shank (15) and a closing head end (17), and a device (12, 18) is provided in the region of the rivet head (11) for mounting a rivet add-on fixture (20, 50), in particular a decorative element, **characterised by** a gauge mouthpiece (40) which is moved so that it lies over the rivet head (11) and device (12, 18) for mounting the rivet add-on fixture during rivetting, and which has a recess (41, 42) which sits in contact with the side of the rivet head (11) remote from the closing head (17) and accommodates the device (12, 18) for mounting a rivet add-on fixture (20, 50).

2. Fixing system as claimed in claim 1, **characterised in that** the rivet add-on fixture (20, 50) is provided in the form of a button-type projection on the facade panel (2).

3. Fixing system as claimed in claim 1 or 2, **characterised in that** the device for mounting the rivet add-on fixture encloses an extension portion (12) of the rivet shank (15), and the rivet add-on fixture is a sleeve-type component (20) with a central orifice (21) which accommodates the rivet shank extension portion (12) so that the sleeve-type component is moved to lie between the rivet head (11) and the top face of the facade panel (2).

4. Fixing system as claimed in claim 3, **characterised in that** the sleeve-type component (20) is essentially of the same external diameter as the rivet head (11).

5. Fixing system as claimed in claim 1 or 2, **characterised in that** the device for mounting the rivet add-on fixture has a fixing portion, which enables the rivet add-on fixture to be affixed on the external face of the rivet head, in other words on the end remote from the rivet shank (15).

6. Fixing system as claimed in claim 5, **characterised in that** the fixing portion is an externally threaded portion (18, 19) standing proud of the external face.

7. Fixing system as claimed in claim 6, **characterised in that** the length of the externally threaded portion (18, 19) is such that it can be securely fixed in a threaded blind bore (41) of a cap element (40), in particular a decorative button, which cap element constitutes the rivet add-on fixture.

8. Fixing system as claimed in claim 7, **characterised in that** the threaded connection between the externally threaded portion (18, 19) and the threaded blind bore (41) is secured by means of micro-encapsulation.

9. Fixing system as claimed in one of claims 6 to 8, **characterised in that** an anti-rotation lock is provided on the closing head end.

10. Fixing system as claimed in claim 9, **characterised in that** the anti-rotation lock incorporates knurling of the closing head end-outer region.

## Revendications

1. Système de fixation de panneaux de façade (2), comportant un rivet borgne (10) avec une tête de rivet (11), une tige de rivet (15) et une extrémité de tête de fermeture (17), dans lequel, dans la zone de la tête de rivet (11) il est prévu un dispositif (12, 18) pour placer un élément supplémentaire de rivet (20, 50), en particulier un élément décoratif, **caractérisé par** un embout gabarit (40) qui, lors du rivetage, vient se placer au-dessus de la tête de rivet (11) et du dispositif (12, 18) pour placer l'élément supplémentaire de rivet (20, 50), et qui présente un évidement (41, 42) pour l'application du côté de la tête de rivet (11), opposé à la tête de fermeture (17), et pour recevoir le dispositif (12, 18) pour placer un élément supplémentaire de rivet (20, 50).

2. Système de fixation selon la revendication 1, **caractérisé en ce que** l'élément supplémentaire de rivet (20, 50) réalise une saillie de type bouton sur le panneau de façade (2).

3. Système de fixation selon la revendication 1 ou 2, **caractérisé en ce que** le dispositif pour placer l'élément supplémentaire de rivet comprend une partie de prolongement (12) de la tige de rivet (15), l'élément supplémentaire de rivet étant un composant (20) de type douille qui présente un passage central (21) lequel reçoit la partie de prolongement de tige de rivet (12), ce qui fait que le composant de type douille vient se placer entre la tête de rivet (11) et la face supérieure du panneau de façade (2).

4. Système de fixation selon la revendication 3, **caractérisé en ce que** le composant (20) de type douille présente sensiblement le même diamètre extérieur que la tête de rivet (11).

5. Système de fixation selon la revendication 1 ou 2, **caractérisé en ce que** le dispositif pour placer l'élément supplémentaire de rivet comprend une partie de fixation qui permet une fixation de l'élément supplémentaire de rivet sur le côté extérieur de la tête de rivet, c'est-à-dire sur le côté opposé à la tige de rivet (15).

6. Système de fixation selon la revendication 5, **caractérisé en ce que** la partie de fixation est une partie à filetage extérieur (18, 19) dépassant du côté extérieur.

7. Système de fixation selon la revendication 6, **caractérisé en ce que** la partie à filetage extérieur (18, 19) a une longueur telle qu'elle peut être fixée de manière sûre dans un trou borgne taraudé (41) d'un élément rapporté (40), en particulier d'un bouton décoratif, l'élément rapporté formant l'élément supplémentaire de rivet.

8. Système de fixation selon la revendication 7, **caractérisé en ce que** la liaison vissée entre la partie à filetage extérieur (18, 19) et le trou borgne taraudé (41) est bloquée par microblindage.

9. Système de fixation selon l'une des revendications 6 à 8, **caractérisé en ce qu'**un blocage en rotation est disposé à l'extrémité de la tête de fermeture.

10. Système de fixation selon la revendication 9, **caractérisé en ce que** le blocage en rotation comprend un moletage de la zone extérieure de l'extrémité de tête de fermeture.
